# EUROPEAN PATENT SPECIFICATION

(11) **EP 4 177 042 B1**
(45) Date of publication and mention of the grant of the patent: **24.07.2024**
(21) Application number: 22215238.1
(22) Date of filing: 19.05.2020
(51) Int. Cl.: B29C 64/153, B22F 3/105, B22F 3/16, B33Y 10/00, B33Y 30/00, B29C 64/268, B29C 64/277, B22F 10/50, B22F 10/66, B22F 12/45, B22F 12/49, B29C 64/241, B29C 64/264, B33Y 40/00, B33Y 40/20, B22F 10/28

(54) **THREE-DIMENSIONAL SHAPING METHOD AND THREE-DIMENSIONAL SHAPING DEVICE**
VERFAHREN UND VORRICHTUNG ZUR DREIDIMENSIONALEN FORMGEBUNG
DISPOSITIF DE FAÇONNAGE TRIDIMENSIONNEL ET PROCÉDÉ DE FAÇONNAGE TRIDIMENSIONNEL

(30) Priority: 21.10.2019 JP 2019192192
(43) Date of publication of application: 10.05.2023
(62) Divisional of application: 20792268.3
(73) Proprietor: Matsuura Machinery Corporation, Fukui City, Fukui 910-8530 (JP)
(72) Inventor: AMAYA, Koichi, Fukui City, 9108530 (JP); YOSHIDA, Mitsuyoshi, Fukui City, 9108530 (JP); TOMITA, Seiichi, Fukui City, 9108530 (JP); SASAKI, Shota, Fukui City, 9108530 (JP)
(74) Representative: Lambacher, Michael

(56) References cited:
- US-A1- 2015 283 611
- US-A1- 2019 151 945

## Description

### Technical Field

The present invention relates to a three-dimensional shaping method and a three-dimensional shaping apparatus which employ a plurality of galvano scanners that scan laser beams along two-dimensional directions which are sequentially focused through dynamic focus lenses.

### Background Art

For three-dimensional shaping in which a sintered surface is formed by irradiating a laser beam onto a powder layer layered on a table, a laser beam that has been transmitted through a dynamic focus lens with an adjustable focal length is used for scanning on the sintered surface with a galvano scanner.

The invention described in Patent Document 1 (hereunder referred to as "prior invention 1") is disclosed as a three-dimensional shaping method wherein, instead of using a single galvano scanner to carry out the scanning, more than one are used and laser beams that have been transmitted through a plurality of galvano scanners are irradiated in slanted directions onto a surface of the table to carry out efficient scanning with a plurality of laser beams, and to allow the space required for three-dimensional shaping to be made more compact compared to irradiation in the perpendicular direction, while the invention described in Patent Document 2 (hereunder referred to as "prior invention 2") is disclosed as a construction for a three-dimensional shaping apparatus in which a plurality of galvano scanners 3, 3a are used and laser beams 7, 7a that have been transmitted through the plurality of galvano scanners 3, 3a are irradiated in slanted directions onto the surface of the table, to exhibit the same effect.

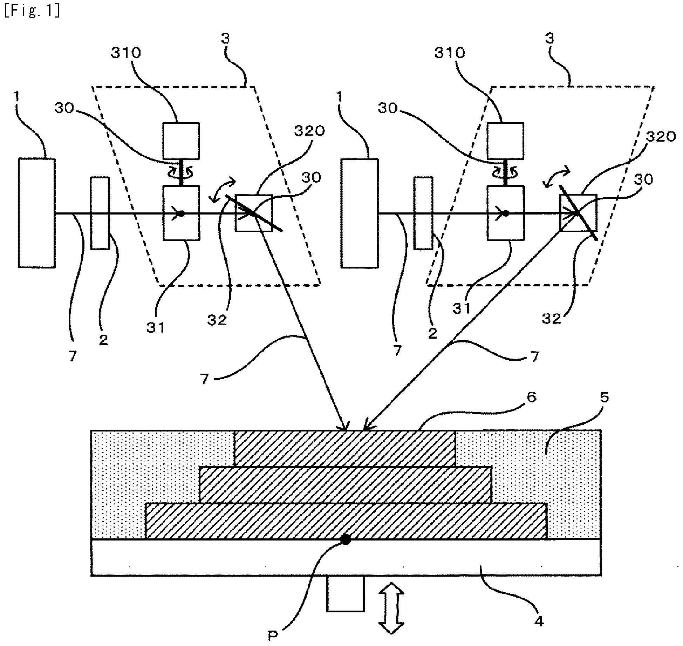

With prior inventions 1 and 2, however, the scanning is carried out with the laser beams 7, 7a over an entire flat surface located on the upper side of an entire region surface of a table 13 (for Patent Document 1, see the disclosure regarding scanning of the entire flat surface, in Fig. 1, Abstract, column 3 line 22, column 4 line 40 and claim 1, and for Patent Document 2, see the disclosure regarding common scanning of the entire flat surface in Fig. 1, Abstract, column 3 line 9 and column 4 line 26, as well as the disclosure regarding movement of the laser beams traversing the flat surface in claim 1).

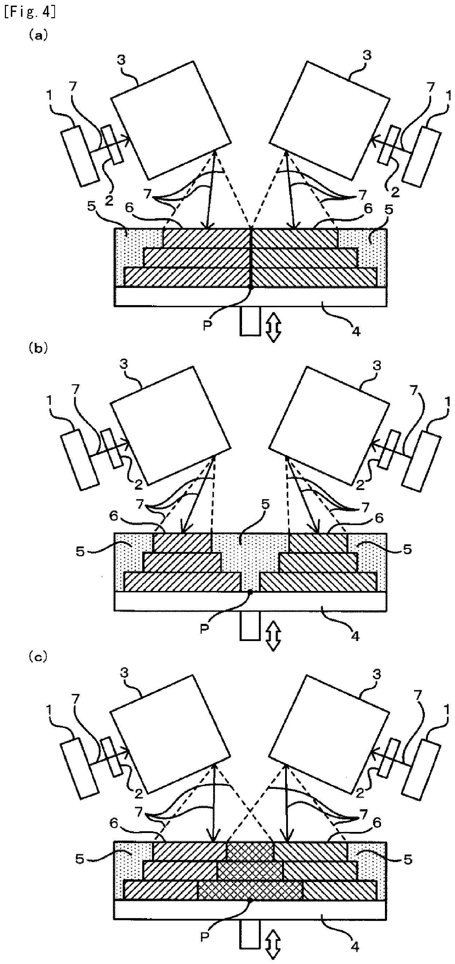

The flat surface corresponds to a focal plane 5 formed for control of focus-adjusting units 9, 9a (Fig. 4 in Patent Document 1 and Fig. 4 in Patent Document 2), however, sintering is not carried out by irradiation with the laser beams 7, 7a over the entire region of the focal plane 5, but rather, it is essential for the focus-adjusting units 9, 9a to be controlled for irradiation at the focal points of the laser beams 7, 7a only in the regions of the focal plane 5 that require sintering, while keeping focus of the laser beams 7, 7a from reaching the focal plane 5 in regions that do not require sintering.

This is because, without such control, the entire region on the entire flat surface, in other words, the focal plane 5 will be constantly subjected to sintering and make it impossible to select only the regions that require the sintered surface to be formed according to each focal plane 5.

However, irradiation in which the laser beams are scanned over the regions where the sintered surface is not to be formed is an inefficient system for the three-dimensional shaping, in terms of excess scanning and irradiation.

The galvano scanners 3, 3a of prior inventions 1 and 2 are each naturally provided with first mirrors that reflect the laser beams 7, 7a that have been transmitted through the focus-adjusting units 9, 9a, and second mirrors that further reflect the laser beams 7, 7a that have been reflected by the first mirrors.

However, prior inventions 1 and 2 do not sufficiently explain the first mirrors and the second mirrors, and consequently it is unclear how the first mirrors and the second mirrors are disposed on the top surface of the table 13 with a center location as reference, and therefore any locations may be selected.

Naturally, therefore, a design may be selected in which each second mirror is disposed on an outer side with respect to each first mirror, with the center location of the surface of the table 13 as reference.

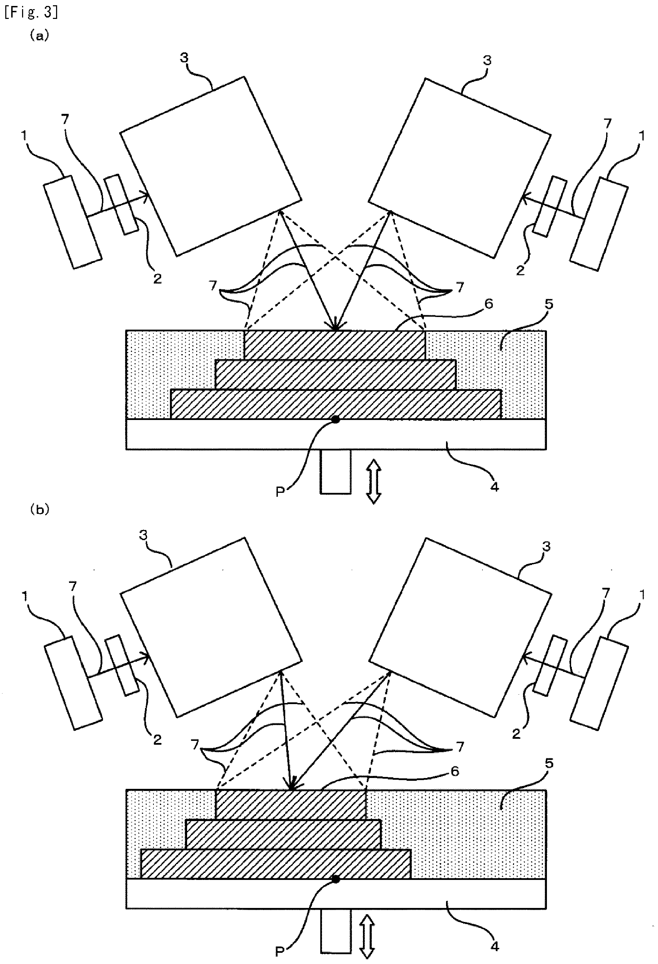

Incidentally, Fig. 3 of prior inventions 1 and 2 suggests that each second mirror is disposed on an inner side with respect to each first mirror, with the center location as reference, however, since Fig. 3 is nothing more than an illustration of an embodiment (the portion shown in Fig. 3), the disclosure in Fig. 3 cannot be used as support for denying the selection mentioned above.

With such a design, however, spacing between the second mirrors becomes wider compared to the opposite design, i.e. a design in which the second mirrors are disposed on the inner side with respect to the first mirrors with the center location as reference, naturally creating an unavoidable disadvantage whereby brightness decreases with greater distance from the center location when the laser beam forms the sintered surface beyond the center location, while in addition, an approximately ellipsoid sintered surface is formed instead of an approximately circular sintered surface when the surface of the table is irradiated in the vertical direction, leading to formation of an inaccurate sintered surface shape and causing outlines at borders of the sintered surface to become indistinct.

Moreover, the direction of a rotation axis on which the second mirror oscillates is unspecified in prior inventions 1 and 2, resulting in technical disadvantages which will be explained below.

### Prior Art Documents

### Patent Documents

Patent Document 1: US 10,029,333 B2
Patent Document 2: US 9,314,972 B2

The document US 2019/151945 A1 discloses a laser beam emitter, which includes first and second laser sources, first and second galvanometer mirror units, and first and second focus control units. The first and second laser beams are emitted to predetermined portions of a material powder layer formed on a molding region to sinter the material powder at the irradiation position.

### Summary of Invention

### Technical Problem to be Solved

It is an object of the present invention to provide a construction for three-dimensional shaping that includes a plurality of galvano scanners for laser beams being transmitted through dynamic focus lenses, in a manner allowing efficient and uniform two-dimensional scanning and irradiation of the laser beams.

### Solution to Solve the Problem

In order to achieve the object stated above, the basic construction of the present invention is as follows:
(1) A three-dimensional shaping method comprising the processes of laminating powder on a table by traveling of a squeegee, sintering a laminated powder layer by irradiation of laser beams, and cutting a sintered layer by traveling of a cutting tool, wherein during the irradiation, a plurality of galvano scanners are employed that carry out scanning in two-dimensional directions based on orthogonal coordinates of the laser beams that have been transmitted through dynamic focus lenses by reflection of the laser beams from first mirrors that oscillate on rotation axes in directions perpendicular to the transmission direction and second mirrors that are perpendicular to the directions of the rotation axes of the first mirrors in an independent state from oscillation of the first mirrors and that oscillate on rotation axes in horizontal directions, and regions of sintered surface produced by the irradiation of the laser beams that have been transmitted through each galvano scanner are freely selectable by free adjustment of oscillation range of each first mirror and second mirror, and the laser beams are irradiated on the sintered surface at focus location or its vicinity by adjustment of the focal lengths of the dynamic focus lenses, and wherein one of the first mirrors is disposed further on an outer side than one of the second mirrors with respect to a center location of the surface of the table, while the other of the first mirrors is disposed further on an inner side than the other of the second mirrors.
(2) A three-dimensional shaping apparatus comprising a squeegee that laminates powder on a table by traveling over it, a sintering apparatus that irradiates a powder layer with laser beams, and a cutting tool that cuts a sintered layer while traveling, wherein during the irradiation, a plurality of galvano scanners are employed that carry out scanning in two-dimensional directions based on orthogonal coordinates of the laser beams that have been transmitted through dynamic focus lenses by reflection of the laser beams from first mirrors that oscillate on rotation axes in directions perpendicular to the transmission direction and second mirrors that are perpendicular to the directions of the rotation axes of the first mirrors in an independent state from oscillation of the first mirrors and that oscillate on the rotation axes in horizontal directions, and controllers allowing free adjustment of oscillation ranges of oscillation drive unit for each first mirror and oscillation drive unit for each second mirror are provided to allow free selection of regions of sintered surface produced by the irradiation of the laser beams, and the laser beams are irradiated on the sintered surface at focus location or its vicinity by adjustment of the focal lengths of the dynamic focus lenses, and wherein one of the first mirrors is disposed further on an outer side than one of the second mirrors with respect to a center location of the surface of the table, while the other of the first mirrors is disposed further on an inner side than the other of the second mirrors.
(3) The three-dimensional shaping method according to (1) above, wherein the first mirror of each galvano scanner oscillates on a rotation axis in the vertical direction perpendicular to the surface of the table.
(4) The three-dimensional shaping apparatus according to (2) above, wherein the first mirror of each galvano scanner oscillates on a rotation axis in the vertical direction perpendicular to the surface of the table.
(5) The three-dimensional shaping method according to (1) above, wherein, during oscillation of the second mirror of each galvano scanner, light reflected at the stage of forming the center location of amplitude by oscillation is in a slanted direction with respect to the surface of the table.
(6) The three-dimensional shaping apparatus according to (2), wherein, during oscillation of the second mirror of each galvano scanner, light reflected at the stage of forming the center location of amplitude by oscillation is in a slanted direction with respect to the surface of the table.

### Advantageous Effects of Invention

With the three-dimensional shaping methods of basic constructions , (1) and the three-dimensional shaping apparatuses of basic constructions (2), it is possible to achieve the same effect as with prior inventions 1 and 2 in terms of carrying out efficient scanning by the plurality of the laser beams after having set a compact space for the three-dimensional shaping, while in addition, even when malfunctions or accidents have occurred with specific galvano scanners, it is possible to clear the malfunctions or accidents by operating other galvano scanners as an effect that is likewise similar to those of prior inventions 1 and 2.

For most cases, when considering size of the galvano scanners in the horizontal direction and area of the surface of the table, actual number of the plurality of the galvano scanners of basic constructions (1), and (2) will be from 2 to 6.

For basic constructions (1) and (2), however, free adjustment of the oscillation ranges of the first mirrors and the oscillation ranges of the second mirrors allows irradiation of the sintered surface by all of the laser beams that have been transmitted through the plurality of the galvano scanners, so that excess scanning and irradiation of prior inventions 1 and 2 can be avoided.

As a result, three-dimensional shaping can be carried out more efficiently than with prior inventions 1 and 2 in terms of the scanning and energy consumption for the three-dimensional shaping.

In addition, since the directions of the rotation axes on which the first mirrors oscillate are in directions perpendicular to the directions in which the laser beams are transmitted, and the rotation axes on which the second mirrors oscillate are perpendicular to the directions of the rotation axes of the first mirrors and in horizontal directions, it is possible to carry out uniform scanning of the laser beams in the two-dimensional directions on the horizontal direction plane along the surface of the table.

Furthermore, when the directions in which the laser beams have been transmitted are the horizontal directions, the directions of the rotation axes of the second mirrors may be set to be parallel to the transmission directions, allowing the spacing between the first mirrors and second mirrors to be made more compact.

In addition, for basic constructions (1) and (2), the sintered surfaces produced by the laser beams that have been transmitted through the plurality of the galvano scanners are mutually independent and in different regions, and therefore that makes it possible to employ embodiments that cannot be carried out in prior inventions 1 and 2.

### Brief Explanation on Drawings

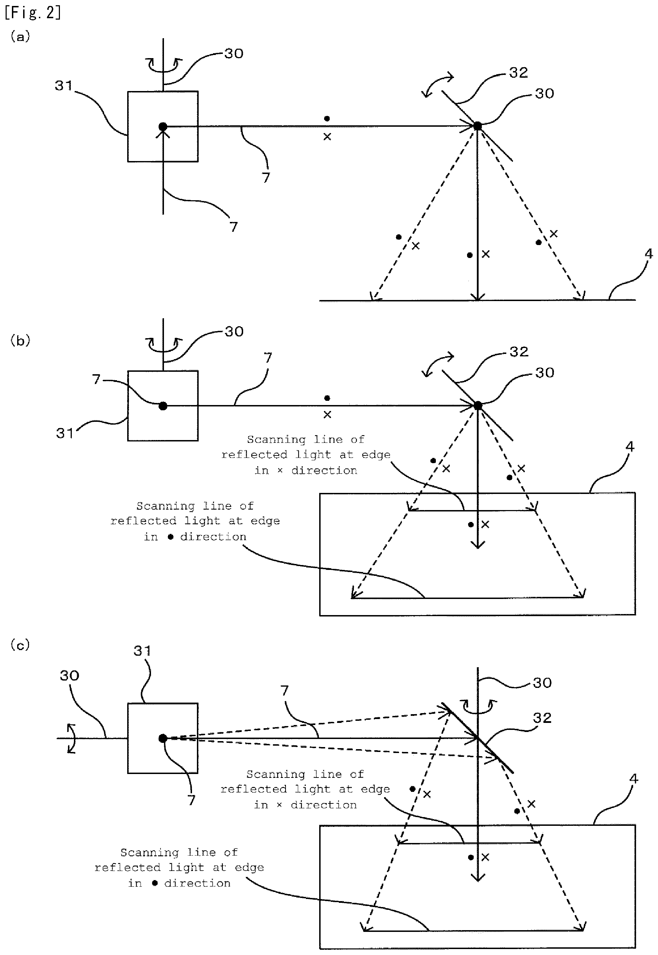

[Fig. 1]
   This is a side view showing the three-dimensional shaping method of basic construction (1) and the three-dimensional shaping apparatus of basic construction (2), as constructions employing basic constructions (3) and (4) (representing a case employing two dynamic focus lenses and two galvano scanners) . The laser beams that are transmitted through the dynamic focus lenses naturally include directions slanted or perpendicular to the plane of the page in Fig. 1, and assuming their inclusion, the dot symbol at the tips of the arrows indicating the traveling directions of the laser beams represents the reflection location.
[Fig. 2]
   This is a set of schematic views illustrating directions of the rotation axes on which a first mirror and a second mirror oscillate, for a case where laser beams that have been transmitted through dynamic focus lenses are slanted with respect to the horizontal direction in basic constructions (1) and (2), where (a) shows a case in which the direction of the rotation axis of the second mirror is in a horizontal direction (the rotation axis of the first mirror is perpendicular to the transmission direction, and not in the vertical direction), (b) shows a case in which the direction of the rotation axis of the second mirror is in the transmission direction (if the transmission direction that is slanted with respect to the surface of the table is set in the direction perpendicular to the plane of the page, the surface of the table that is slanted with respect to the transmission direction is represented not by a flat shape perpendicular to the plane of the page as in (a), but rather by a state that is slanted at a prescribed width in the direction on the plane of the page in the top-bottom direction, and (c) shows a case in which the rotation axis of the second mirror is perpendicular to both the direction of the rotation axis of the first mirror and the transmission direction (and similar to (b), if the transmission direction that is slanted with respect to the surface of the table is set in the direction perpendicular to the plane of the page, the surface of the table that is slanted with respect to the transmission direction is represented by the state that is slanted at a prescribed width in the direction on the plane of the page in the top-bottom direction, as shown in (c). Each dot symbol in Fig. 2(a), (b) and (c) represents the direction from the back side toward the front side on the plane of the page, and the × symbol represents the direction from the front side toward the back side on the plane of the page.
[Fig. 3]
   Fig. 3(a) shows a configuration in which, during oscillation of the second mirror of each galvano scanner, the irradiation positions match on the sintered surface for reflected light reflected at the stage where the center location of amplitude by oscillation is formed. Fig. 3(b) shows a configuration in which the irradiation positions match on the irradiated surface for reflected light reflected from a location not corresponding to the center location, for the oscillation of the second mirror of each galvano scanner.
[Fig. 4]
   Fig. 4 shows a set of side views where the sintered surfaces by the laser beams that have been transmitted through the plurality of the galvano scanners are mutually independent and in different regions, with (a) showing a case in which the regions are adjacent, (b) showing a case in which the regions are mutually separated, and (c) showing a case in which the regions are overlapping at their mutual borders.

The configurations of Fig. 3 and Fig. 4 are not covered by the claims.

### Description of Embodiments for Executing the Invention

The three-dimensional shaping method according to basic construction (1) is based on the assumption of carrying out the processes of powder lamination on a table 4 by traveling of a squeeqee, of sintering by irradiation of laser beams 7 onto a laminated powder layer 5 and of cutting of the sintered layer by traveling of the cutting tool, while the three-dimensional shaping apparatus according to basic construction (2) is based on the assumption of including the squeeqee that laminates powder on the table 4 as it travels, the sintering apparatus that irradiates the laser beams 7 onto the powder layer 5, and the cutting tool that cuts the sintered layer while traveling.

With these basic assumptions, the methods according to basic construction (1) and the apparatus according to basic constructions (2), as shown in Fig. 1, employ a plurality of galvano scanners 3 which carry out scanning in two-dimensional directions with reference to orthogonal coordinates of the laser beams 7, and during irradiation of the laser beams 7, which are oscillated by the laser beam oscillation sources 1, the laser beam 7 that has been transmitted through each dynamic focus lens 2 being reflected from a first mirror 31 that oscillates on a rotation axis 30 in the direction perpendicular to the transmission direction, and the second mirror 32 that is perpendicular to the direction of the rotation axis 30 of the first mirror 31, in a state independent from oscillation of the first mirror 31, and oscillates on the rotation axis 30 in a horizontal direction, however, according to the prior inventions 1 and 2, the direction of the rotation axis 30 on which the second mirror 32 oscillates is completely unclear among the constructions based on such employment.

The fact that the constructions of the inventions of prior inventions 1 and 2 are altogether insufficient will now be explained with reference to Fig. 2(a), (b) and (c).

If the direction of the rotation axis 30 of the first mirror 31 is perpendicular to the transmission direction of the laser beam 7, this means that oscillation on the rotation axis 30 allows the laser beam 7 to scan in the plane that includes the transmission direction, which is a naturally necessary condition in technical terms.

In order to carry out two-dimensional scanning in horizontal directions along the plane of the table 4 by scanning with the first mirror 31 and scanning with the second mirror 32, it is essential for the direction of the rotation axis 30 of the second mirror 32 to be perpendicular to the direction of the rotation axis 30 of the first mirror 31.

When scanning is carried out in two-dimensional directions through the first mirror 31 and the second mirror 32, the direction of the rotation axis 30 of the second mirror 32 with respect to the rotation axis 30 of the first mirror 31 that is perpendicular to the transmission direction of the laser beam 7 may be one of 3 cases: the horizontal direction as shown in Fig. 2 (a), the transmission direction of the laser beam 7 as shown in Fig. 2(b), and the direction perpendicular not only to the direction of the rotation axis 30 of the first mirror 31 but also to the transmission direction of the laser beam 7 as shown in Fig. 2(c).

With the direction shown in Fig. 2 (a), it is possible to carry out the uniform scanning along the horizontal direction which is along the surface of the table 4, with reflected light from the first mirror 31 along the plane that includes the transmission direction (reflected light scanning along the directions toward the front and the back on the plane of the page indicated by the dot symbols and × symbols), by oscillation on the rotation axis 30 of the second mirror 32 which is along the horizontal direction.

With the direction shown in Fig. 2(b), on the other hand, since the transmission direction of the laser beam 7 is slanted with respect to the surface of the table 4, the rotation axis 30 of the second mirror 32 is not in the horizontal direction.

Therefore, the distance from the horizontal plane along the surface of the table 4 differs depending on the location where the laser beam 7 is reflected from the second mirror 32, and therefore that makes it impossible to carry out uniform scanning along the horizontal plane.

More specifically, as shown in Fig. 2 (b), since a scanning line of the laser beam 7 that has been reflected from the second mirror 32 at a location at an edge in the back side direction on the plane of the page represented by the × symbol, and the scanning line of the laser beam 7 that has been reflected from the second mirror 32 at the edge in the front side direction on the plane of the page represented by the dot symbol, differ by a distance with respect to the horizontal plane, and therefore the lengths of the respective scanning lines also necessarily differ.

Consequently, with reflection by the second mirror 32 shown in Fig. 2(b), it is not possible to carry out the uniform and accurate scanning in two-dimensional directions on the horizontal plane along the surface of the table 4.

In the case shown in Fig. 2(c) as well, since the direction of the rotation axis 30 of the second mirror 32 is not in the horizontal direction as shown in Fig. 2(a), the distance with respect to the horizontal plane differs depending on the location where the laser beam 7 reflected by the first mirror 31 is reflected by the second mirror 32, and as shown in Fig. 2(c), the lengths of the scanning lines of the laser beam 7 reflected by the second mirror 32 at the locations on both the front side and the back side edges on the plane of the page also differ, likewise making it impossible to carry out the uniform and the accurate scanning in two-dimensional directions on the horizontal plane along the surface of the table 4.

However, while prior inventions 1 and 2 include cases where the laser beam 7 that has been transmitted through the dynamic focus lens 2 is slanted with respect to the horizontal direction, the direction of the rotation axis 30 of the second mirror 32 is left completely unspecified, and therefore the direction of the rotation axis 30 of the second mirror 32 is undefined and it is completely unclear which of Fig. 2(a), (b), (c) was employed.

In such a case, in Fig. 3 of prior inventions 1 and 2, it appears that the laser beam 7 reflected from the first mirror 31 is scanned in a left-right direction on the plane of the page, and that since the scanning in the left-right direction can be carried out when the direction of the rotation axis 30 of the second mirror 32 is as shown in any of Fig. 2(a), (b) or (c), the construction of any of Fig. 2(a), (b), (c) must be also included.

Therefore, the methods of basic construction (1) and the apparatus of basic construction (2) specify the direction of the rotation axis 30 of the second mirror 32 to be the horizontal direction, and thus they provide a clear advantage of technical content compared to prior inventions 1 and 2, in terms of allowing the uniform and accurate two-dimensional scanning to be carried out in the horizontal direction.

The methods of basic construction (1) and the apparatus of basic construction (2) are suitable for rectangular three-dimensional shaping.

Each of the methods of basic construction (1) and each of the apparatus of basic construction (2) can be applied for polygonal three-dimensional shaping.

The first mirror 31 of each galvano scanner 3 may oscillate on the rotation axis 30 in a direction slanted with respect to the surface of the table 4.

In such a case a compact design in the top-bottom direction is achieved, since the rotation axis 30 of the first mirror 31 is set in a direction that is slanted with respect to the surface of the table 4.

According to state that the direction in which the laser beam 7 has been transmitted through the dynamic focus lens 2 is also set to be slanted with respect to the surface of the table 4, a more compact design in the top-bottom direction may be promoted.

However, the direction of the laser beam 7 does not need to be slanted with respect to the surface of the table 4.

As shown in Fig. 1, basic constructions (3) and (4) have the first mirror 31 of each galvano scanner 3 oscillating on the rotation axis 30 in the vertical direction that is perpendicular to the surface of the table 4.

That is, similar to a conventional galvano scanner 3, oscillation of the first mirror 31 is with reference to the horizontal direction and the oscillation of the second mirror 32 is with reference to the vertical direction, thus allowing stable operation to be achieved.

Furthermore, since the direction of the rotation axis 30 of the first mirror 31 is vertical in basic constructions (3) and (4), the direction of the rotation axis 30 of the second mirror 32 may be selected to be any horizontal direction across 360° perpendicular to the direction of the rotation axis 30 of the first mirror 31, and it may also be selected to be any horizontal direction that is parallel to the direction of the laser beam 7 that has been transmitted through the dynamic focus lens 2.

In the configurations illustrated in Figs. 3(a) and 3(b), wherein the oscillation range of the first mirror 31 and the oscillation range of the second mirror 32 are freely adjustable, the regions selected in a freely adjustable manner as sintered surfaces 6 produced by irradiation of the laser beams 7 transmitted through the plurality of the galvano scanners 3 will match, however, it will be possible to employ an embodiment in which irradiation positions match on the sintered surface 6 for reflected light reflected at the stage where the center location of amplitude by oscillation is formed during oscillation of the second mirror 32 of each galvano scanner 3 as shown in Fig. 3(a), and an embodiment in which the irradiation positions match on the sintered surface 6 for reflected light reflected from locations that do not correspond to the center location of amplitude by oscillation during oscillation of the second mirror 32 of each galvano scanner 3 as shown in Fig. 3(b).

When the regions of the sintered surface 6 produced by irradiation of the laser beams 7 from each of the galvano scanners 3 match as shown in Fig. 3(a) and (b), the sintered surfaces 6 are rapidly formed by superimposed sintering, thus more efficient three-dimensional shaping may be promoted.

In the case of the embodiment illustrated in Fig. 3(a), the amplitudes on both sides of the center location of the oscillation of the second mirror 32 can be adjusted to allow free selection of regions on the sintered surface 6 with respect to a center location P in the horizontal direction of the table 4.

In the case of the embodiment illustrated in Fig. 3(b), on the other hand, it is possible at any time to select a region of the sintered surface 6 at an arbitrary location separated from the center location P in the horizontal direction of the table 4.

With basic constructions (1), (2), free adjustment of the oscillation range of each first mirror 31 and the oscillation range of each second mirror 32 allows an embodiment to be employed in which the sintered surfaces 6 formed by the laser beams 7 transmitted through the plurality of the galvano scanners 3 are mutually independent and in different regions, and such an embodiment may also be an embodiment in which the regions are adjacent as shown in Fig. 4(a), an embodiment in which the regions are mutually separate as shown in Fig. 4 (b), or an embodiment in which the regions are overlapping at their borders as shown in Fig. 4(c).

There exist a large variety of forms of the sintered surfaces 6 that are mutually independent and form different regions, and application to the sintered surfaces 6 of such different forms by irradiation of the laser beams 7 from the plurality of the galvano scanners 3 is possible because the regions of the sintered surfaces 6 are freely selectable in each basic construction.

With the embodiments illustrated in Fig. 4(a), (b) and (c), it is possible to carry out efficient three-dimensional shaping since the sintered surfaces 6 that are mutually independent and in different regions are simultaneously and together by irradiation from the plurality of the galvano scanners 3.

In the basic constructions (1) and (2), a construction such as shown in Fig 1 is employed, where one of the first mirrors 31 is disposed further on the outer side than one of the second mirrors 32 with respect to the center location P of the surface of the table 4, while the other of the first mirrors 31 is disposed further on the inner side than the other of the second mirrors 32.

In the basic constructions (1) and (2), it is possible to avoid the problem that occurs when each of the first mirrors 31 is disposed further on the inner side than each of the second mirrors 32.

An example of the invention will now be described.

### Example

As shown in Fig. 1, in the Example, reflected light reflected at the stage where the center location of amplitude by oscillation is formed is in a slanted direction with respect to the surface of the table 4 during oscillation of the second mirror 32 of each galvano scanner 3.

According to such a feature, the Example lowers the location of each galvano scanner 3 in the vertical direction (height direction) compared to the case when the laser beams 7 are perpendicular to the surface of the table 4, while free adjustment of each oscillation range for the first mirror 31 and second mirror 32 allows free selection of the necessary region of the sintered surface 6 on the surface of the table 4.

This does not mean, however, that the embodiment where the laser beams 7 are perpendicular to the surface of the table 4 is necessarily excluded when the Example is implemented.

### Industrial Applicability

The present invention is innovative in terms of carrying out efficient three-dimensional shaping, and it has a wide range of application.

### Reference Signs List

1: Laser beam oscillation source
2: Dynamic focus lens
3: Galvano scanner
30: Rotation axis
31: First mirror
32: Second mirror
310: Oscillation drive unit for first mirror
320: Oscillation drive unit for second mirror
4: Table
5: Powder layer
6: Sintered surface
7: Laser beam
P: Center location of surface of table
Q, Q': Line symmetry reference position for placement in opposite directions at prescribed distance with respect to P

## Claims

1. A three-dimensional shaping method comprising the processes of laminating powder on a table (4) by traveling of a squeegee, sintering a laminated powder layer (5) by irradiation of laser beams (7), and cutting a sintered layer by traveling of a cutting tool, wherein during the irradiation, a plurality of galvano scanners (3) are employed that carry out scanning in two-dimensional directions based on orthogonal coordinates of the laser beams (7) that have been transmitted through dynamic focus lenses (2) by reflection of the laser beams (7) from first mirrors (31) that oscillate on rotation axes (30) in directions perpendicular to the transmission direction and second mirrors (32) that are perpendicular to the directions of the rotation axes (30) of the first mirrors (31) in an independent state from oscillation of the first mirrors (31) and that oscillate on rotation axes (30) in horizontal directions, and regions of sintered surface (6) produced by the irradiation of the laser beams (7) that have been transmitted through each galvano scanner (3) are freely selectable by free adjustment of oscillation range of each first mirror (31) and second mirror (32), and the laser beams (7) are irradiated on the sintered surface (6) at focus location or its vicinity by adjustment of the focal lengths of the dynamic focus lenses (2), wherein one of the first mirrors (31) is disposed further on an outer side than one of the second mirrors (32) with respect to a center location of the surface of the table, while the other of the first mirrors (31) is disposed further on an inner side than the other of the second mirrors (32).

2. A three-dimensional shaping apparatus comprising a squeegee that laminates powder on a table (4) by traveling over it, a sintering apparatus that irradiates a powder layer (5) with laser beams (7), and a cutting tool that cuts a sintered layer while traveling, wherein during the irradiation, a plurality of galvano scanners (3) are employed that carry out scanning in two-dimensional directions based on orthogonal coordinates of the laser beams (7) that have been transmitted through dynamic focus lenses (2) by reflection of the laser beams (7) from first mirrors (31) that oscillate on rotation axes (30) in directions perpendicular to the transmission direction and second mirrors (32) that are perpendicular to the directions of the rotation axes (30) of the first mirrors (31) in an independent state from oscillation of the first mirrors (31) and that oscillate on the rotation axes (30) in horizontal directions, and controllers allowing free adjustment of oscillation ranges of oscillation drive unit (310) for each first mirror (31) and oscillation drive unit (320) for each second mirror (32) are provided to allow free selection of regions of sintered surface (6) produced by the irradiation of the laser beams (7), and the laser beams (7) are irradiated on the sintered surface (6) at focus location or its vicinity by adjustment of the focal lengths of the dynamic focus lenses (2), wherein one of the first mirrors (31) is disposed further on an outer side than one of the second mirrors (32) with respect to a center location of the surface of the table, while the other of the first mirrors (31) is disposed further on an inner side than the other of the second mirrors (32).

3. The three-dimensional shaping method according to claim 1, wherein the first mirror (31) of each galvano scanner (3) oscillates on a rotation axis (30) in the vertical direction perpendicular to the surface of the table (4).

4. The three-dimensional shaping apparatus according to claim 2, wherein the first mirror (31) of each galvano scanner (3) oscillates on a rotation axis (30) in the vertical direction perpendicular to the surface of the table (4).

5. The three-dimensional shaping method according to claim 1, wherein, during oscillation of the second mirror (32) of each galvano scanner (3), light reflected at the stage of forming the center location of amplitude by oscillation is in a slanted direction with respect to the surface of the table (4) .

6. The three-dimensional shaping apparatus according to claim 2, wherein, during oscillation of the second mirror (32) of each galvano scanner (3), light reflected at the stage of forming the center location of amplitude by oscillation is in a slanted direction with respect to the surface of the table (4) .

## Patentansprüche

1. Dreidimensionales Formungsverfahren umfassend die Prozesse eines Schichtens von Pulver auf einen Tisch (4) durch Bewegen eines Abstreifers, Sintern einer geschichteten Pulverschicht (5) durch Bestrahlung mit Laserstrahlen (7), und Schneiden einer gesinterten Schicht durch Bewegen eines Schneidwerkzeugs, wobei während der Bestrahlung eine Vielzahl von Galvanoscannern (3) eingesetzt werden, die ein Scannen in zweidimensionalen Richtungen basierend auf orthogonalen Koordinaten der Laserstrahlen (7) ausführen, die durch Linsen mit dynamischem Fokus (2) übertragen worden sind, durch Reflexion der Laserstrahlen (7) von ersten Spiegeln (31), die an Drehachsen (30) in Richtungen senkrecht zur Übertragungsrichtung oszillieren, und zweiten Spiegeln (32), die senkrecht zu den Richtungen der Drehachsen (30) der ersten Spiegel (31), in einem unabhängigen Zustand von der Oszillation der ersten Spiegel (31), sind und die an Drehachsen (30) in horizontalen Richtungen oszillieren, und Bereiche einer gesinterten Oberfläche (6), die durch die Bestrahlung mit den Laserstrahlen (7) erzeugt werden, die durch jeden Galvanoscanner übertragen worden sind, durch freie Anpassung eines Oszillationsbereichs jedes ersten Spiegels (31) und zweiten Spiegels (32) frei auswählbar sind, und die Laserstrahlen (7) auf die gesinterte Oberfläche (6) an einem Fokusort oder in dessen Nähe durch Anpassung der Fokallängen der Linsen mit dynamischem Fokus (2) eingestrahlt werden, wobei einer der ersten Spiegel (31) weiter auf einer Außenseite als einer der zweiten Spiegel (32) in Bezug auf einen zentralen Ort der Oberfläche des Tisches angeordnet ist, während der andere der ersten Spiegel (31) weiter auf einer Innenseite als der andere der zweiten Spiegel (32) angeordnet ist.

2. Dreidimensionale Formungsvorrichtung umfassend einen Abstreifer, der Pulver auf einen Tisch (4) schichtet, indem er sich über diesen bewegt, eine Sintervorrichtung, die eine Pulverschicht (5) mit Laserstrahlen (7) bestrahlt, und ein Schneidwerkzeug, das eine gesinterte Schicht schneidet, während es sich bewegt, wobei während der Bestrahlung eine Vielzahl von Galvanoscannern (3) eingesetzt werden, die ein Scannen in zweidimensionalen Richtungen basierend auf orthogonalen Koordinaten der Laserstrahlen (7) ausführen, die durch Linsen mit dynamischem Fokus (2) übertragen worden sind, durch Reflexion der Laserstrahlen (7) von ersten Spiegeln (31), die an Drehachsen (30) in Richtungen senkrecht zur Übertragungsrichtung oszillieren, und zweiten Spiegeln (32), die senkrecht zu den Richtungen der Drehachsen (30) der ersten Spiegel (31), in einem unabhängigen Zustand von der Oszillation der ersten Spiegel (31), sind und die an den Drehachsen (30) in horizontalen Richtungen oszillieren, und Steuereinrichtungen, die eine freie Anpassung von Oszillationsbereichen einer Oszillationsantriebseinheit (310) für jeden ersten Spiegel (31) und einer Oszillationsantriebseinheit (320) für jeden zweiten Spiegel (32) ermöglichen, vorgesehen sind, um eine freie Auswahl von Bereichen einer gesinterten Oberfläche (6), die durch die Bestrahlung der Laserstrahlen (7) erzeugt werden, zu erlauben, und die Laserstrahlen (7) auf die gesinterte Oberfläche (6) an einem Fokusort oder in dessen Nähe durch Anpassung der Fokallängen der Linsen mit dynamischem Fokus (2) eingestrahlt werden, wobei einer der ersten Spiegel (31) weiter auf einer Außenseite als einer der zweiten Spiegel (32) in Bezug auf einen zentralen Ort der Oberfläche des Tisches angeordnet ist, während der andere der ersten Spiegel (31) weiter auf einer Innenseite als der andere der zweiten Spiegel (32) angeordnet ist.

3. Dreidimensionales Formungsverfahren nach Anspruch 1, wobei der erste Spiegel (31) jedes Galvanoscanners (3) an einer Drehachse (30) in der vertikalen Richtung senkrecht zur Oberfläche des Tisches (4) oszilliert.

4. Dreidimensionale Formungsvorrichtung nach Anspruch 2, wobei der erste Spiegel (31) jedes Galvanoscanners (3) an einer Drehachse (30) in der vertikalen Richtung senkrecht zur Oberfläche des Tisches (4) oszilliert.

5. Dreidimensionales Formungsverfahren nach Anspruch 1, wobei während einer Oszillation des zweiten Spiegels (32) jedes Galvanoscanners (3) Licht, das im Stadium eines Bildens des zentralen Orts einer Amplitude durch Oszillation reflektiert wird, in einer schrägen Richtung in Bezug auf die Oberfläche des Tisches (4) ist.

6. Dreidimensionale Formungsvorrichtung nach Anspruch 2, wobei während einer Oszillation des zweiten Spiegels (32) jedes Galvanoscanners (3) Licht, das im Stadium eines Bildens des zentralen Orts einer Amplitude durch Oszillation reflektiert wird, in einer schrägen Richtung in Bezug auf die Oberfläche des Tisches (4) ist.

## Revendications

1. Procédé de façonnage tridimensionnel comprenant les processus de stratification de poudre sur une table (4) par déplacement d'une raclette, de frittage d'une couche de poudre stratifiée (5) par irradiation de faisceaux laser (7), et de découpe d'une couche frittée par déplacement d'un outil de coupe, dans lequel, pendant l'irradiation, une pluralité de scanners galvanométriques (3) sont utilisés qui effectuent un balayage dans des directions bidimensionnelles sur la base de coordonnées orthogonales des faisceaux laser (7) qui ont été transmis à travers des lentilles à focalisation dynamique (2) par réflexion des faisceaux laser (7) depuis des premiers miroirs (31) qui oscillent sur des axes de rotation (30) dans des directions perpendiculaires à la direction de transmission et des seconds miroirs (32) qui sont perpendiculaires aux directions des axes de rotation (30) des premiers miroirs (31) dans un état indépendant de l'oscillation des premiers miroirs (31) et qui oscillent sur des axes de rotation (30) dans des directions horizontales, et des régions de surface frittée (6) produites par l'irradiation des faisceaux laser (7) qui ont été transmis à travers chaque scanner galvanométrique (3) sont librement sélectionnables par réglage libre de la plage d'oscillation de chaque premier miroir (31) et second miroir (32), et les faisceaux laser (7) sont irradiés sur la surface frittée (6) à un emplacement de focalisation ou à proximité de celui-ci, par réglage des longueurs focales des lentilles à focalisation dynamique (2), dans lequel l'un des premiers miroirs (31) est disposé plus loin sur un côté extérieur que l'un des seconds miroirs (32) par rapport à un emplacement central de la surface de la table, tandis que l'autre des premiers miroirs (31) est disposé plus loin sur un côté intérieur que l'autre des seconds miroirs (32).

2. Appareil de façonnage tridimensionnel comprenant une raclette qui stratifie la poudre sur une table (4) en se déplaçant dessus, un appareil de frittage qui irradie une couche de poudre (5) avec des faisceaux laser (7), et un outil de coupe qui coupe une couche frittée pendant le déplacement, dans lequel, pendant l'irradiation, une pluralité de scanners galvanométriques (3) sont utilisés qui effectuent un balayage dans des directions bidimensionnelles sur la base de coordonnées orthogonales des faisceaux laser (7) qui ont été transmis à travers des lentilles à focalisation dynamique (2) par réflexion des faisceaux laser (7) depuis des premiers miroirs (31) qui oscillent sur des axes de rotation (30) dans des directions perpendiculaires à la direction de transmission et des seconds miroirs (32) qui sont perpendiculaires aux directions des axes de rotation (30) des premiers miroirs (31) dans un état indépendant de l'oscillation des premiers miroirs (31) et qui oscillent sur les axes de rotation (30) dans des directions horizontales, et des dispositifs de commande permettant un réglage libre des plages d'oscillation de l'unité d'entraînement d'oscillation (310) pour chaque premier miroir (31) et de l'unité d'entraînement d'oscillation (320) pour chaque second miroir (32) sont prévus pour permettre une sélection libre de régions de surface frittée (6) produites par l'irradiation des faisceaux laser (7), et les faisceaux laser (7) sont irradiés sur la surface frittée (6) à un emplacement de focalisation ou à proximité de celui-ci par réglage des longueurs focales des lentilles à focalisation dynamique (2), dans lequel l'un des premiers miroirs (31) est disposé plus loin sur un côté extérieur que l'un des seconds miroirs (32) par rapport à un emplacement central de la surface de la table, tandis que l'autre des premiers miroirs (31) est disposé plus loin sur un côté intérieur que l'autre des seconds miroirs (32).

3. Procédé de façonnage tridimensionnel selon la revendication 1, dans lequel le premier miroir (31) de chaque scanner galvanométrique (3) oscille sur un axe de rotation (30) dans la direction verticale perpendiculaire à la surface de la table (4).

4. Appareil de façonnage tridimensionnel selon la revendication 2, dans lequel le premier miroir (31) de chaque scanner galvanométrique (3) oscille sur un axe de rotation (30) dans la direction verticale perpendiculaire à la surface de la table (4).

5. Procédé de façonnage tridimensionnel selon la revendication 1, dans lequel, pendant l'oscillation du second miroir (32) de chaque scanner galvanométrique (3), la lumière réfléchie au stade de formation de l'emplacement central d'amplitude par oscillation est dans une direction inclinée par rapport à la surface de la table (4).

6. Appareil de façonnage tridimensionnel selon la revendication 2, dans lequel, pendant l'oscillation du second miroir (32) de chaque scanner galvanométrique (3), la lumière réfléchie au stade de formation de l'emplacement central d'amplitude par oscillation est dans une direction inclinée par rapport à la surface de la table (4).
